# EUROPEAN PATENT APPLICATION

(11) **EP 4 733 582 A1**
(43) Date of publication of application: **29.04.2026**
(21) Application number: 24208250.1
(22) Date of filing: 23.10.2024
(51) Int. Cl.: F03D 80/80, H02B 1/26

(54) **ARC RESISTANT ENCLOSURE FOR WIND TURBINE POWER CONVERTERS**

(71) Applicant: Siemens Gamesa Renewable Energy A/S, 7330 Brande (DK)
(72) Inventor: Sethu, Maniarasan, 7400 Herning (DK); Rasmussen, Brian, 7323 Give (DK)
(74) Representative: SGRE-Association

(57) **Abstract**

The present invention refers to an arc resistant enclosure for power converters, especially for low power converters of a wind turbine. The enclosure (1) made of an electrically isolating and arc-resistant material, wherein the enclosure (1) configures a first compartment (3) adapted for housing busbars (4) of a low or high voltage converter, and a second compartment (5) adapted for housing fuses (6). The first and second compartments (3, 5) are isolated from each other, thereby forming a barrier to an arch flash occurring in one of the compartments from reaching the other compartment. The enclosure serves as a robust electrical insulator to isolate electrically live conducting parts from other internal components within a power converter, in order to mitigate damages caused by electric arc flash and short circuits, thereby, protecting components of the converter and safeguarding service personnel.

## Description

### TECHNICAL FIELD

The present invention refers to an arc resistant enclosure or bunker for power converters, especially for low a power converter of a wind turbine, although it could also be used for high-voltage applications.

### STATE OF THE ART

One of the primary concerns in the operation of low voltage converters of a wind turbine, is the elevated risk of arc flashes and short circuits. Arc flashes may occur due to various factors, including electrical faults, equipment malfunctions, or external disturbances.

When arcing faults occur, in particular in medium- to high-voltage power applications wherein levels of energy involved are quite significant, the ionized gas associated with them may be released at significant pressures and temperatures sufficient to severely damage or destroy electric components, and they could also be potentially dangerous for operating personnel or equipment outside the enclosure. In particular, the materials involved in or exposed to the arc produce hot decomposition products, both gaseous and particulate either plastic and/or metallic, which may be discharged to the outside of the enclosure together with or in addition to hot gases and flames.

An internal arcing fault can be caused by insulation degradation, insulation, contamination, entrance of vermin, foreign objects coming into contact with the energized bus, or any other unplanned condition that creates an electrical discharge path through air. During an arcing fault, the voltage at the fault location is essentially the system voltage and the fault energy is focused within the switchgear enclosure. Arc temperatures can exceed 20,000 degrees Kelvin, rapidly heating the air and vaporizing metal parts. The expanding plasma creates severe mechanical and thermal stress in the equipment which can blow open doors and covers, and burn through or fragment the enclosure and/or cause severe injury to an operator who may happen to be nearby.

Current designs of the grid section within the voltage converter exhibits several significant shortcomings, as they are open, intricate, and ineffective configuration, rendering them potentially unsafe for personnel to work within being exposed to electric shocks.

It is imperative to address these issues comprehensively to ensure functionality of voltage converters of wind turbines and ensure safety of personal performing normal operating duties in proximity to the energized equipment.

An object of the invention is the provision of an arc resistant enclosure, which serves as a robust electrical insulator to isolate electrically live conducting parts from other internal components within a voltage converter, in order to mitigate damages caused by electric arc flashes and short circuits, thereby, protecting components of the converter and safeguarding service personnel.

An additional object of the invention, is to provide an arc resistant enclosure featuring an efficient air cooling of busbar terminals, optimizing heat dissipation and maintaining operational efficiency of the voltage converter.

### DESCRIPTION OF THE INVENTION

The invention is defined in the attached independent claim, and satisfactorily solves the above-described drawbacks of the prior art, by the provision of an arc-resistant enclosure for protecting critical components, managing arc flashes and short circuit risks in order to ensure safety of personnel. The configuration of the enclosure, serves as a robust defense against potential hazards, making it an integral part of the overall safety and functionality of a voltage converter of a wind turbine.

More specifically, an aspect of the invention refers to an arc-resistant enclosure for wind turbine power converters, where the enclosure made is of an electrically isolating and arc-resistant material, wherein the enclosure has internally a first compartment adapted for housing busbars of a low or high voltage converter, and a second compartment adapted for housing fuses or part of the fuses of the low or high voltage converter, wherein the first and second compartments are isolated from each other by means forming by a barrier for an arch flash occurring in one of the compartments from reaching the other compartment. In other words, the barrier formed by two isolated compartments prevents, or resists, against an arch flash occurring in one of the compartments from reaching the other compartment.

For the arc-resistant enclosure for a power converter of a wind turbine, the enclosure made of an electrically isolating and arc-resistant material means that the material is capable of withstanding and absorbing forces generated during an arc event, without being structurally damaged or significantly deteriorated. Preferably, the material is made of fiberglass, which is a suitable material serving as a robust electrical insulator to isolate the electrically live conducting parts from other internal components within the converter, and achieving a high Ingress Protection (IP) rating, ensuring durability and reliability in demanding environments, and minimizing risk of harming personnel working in the vicinity, in particular the invention eliminates risks associated with electric shock following Lockout-Tagout (LOTO) procedures. The high IP rating effectively prevents the ingress of foreign objects, minimizing the likelihood of accidental arc initiation and enhancing system safety.

The enclosure may comprise an intermediate wall separating the first and second compartments, this wall forming at least part of the barrier. The intermediate wall may be a detachable panel making it easy to install, service or replace.

The intermediate wall (1f) having openings, each opening configured for retaining a fuse (6) such that when a fuse is installed in one of the openings, one part of the fuse is placed at the first compartment (3) and other part of the fuse is placed at the second compartment (5).

The enclosure may be formed of, or at least comprise a plurality of panels wherein the panels are assembled to configure a closed space. The panels may be formed of fiberglass. The panels then are assembled together to configure a closed space, that is, a space which cannot be accessed by doors or hatches, so that the enclosure interior can only be accessed by removing one panel using proper tools.

The enclosure may have a first compartment adapted for housing bus-bars of a voltage converter, and a second compartment adapted for housing fuses or part of the fuses of the voltage converter. The first and second compartments are isolated from each other, thereby preventing an arch flash occurring in one of the compartments, from reaching the other compartment. The isolation is formed at least partly by an intermediate wall,

Furthermore, the enclosure may include an intermediate panel separating the first and second compartments, and the intermediate panel has openings configured for retaining a fuse such that when a fuse is installed in one of the openings, one part of the fuse (the safe side of the fuse) is placed at the first compartment and other part of the fuse is placed at the second compartment. Therefore, an arc occurring at the safe side of the fuse, is effectively contained and isolated to avoid entering the first compartment meant for the busbar installation. This feature significantly reduces the risk of arc-related hazards within these vital areas, ensuring the continued safety and reliability of the electrical system.

Additionally, the enclosure may configure a ventilation channel extending vertically inside the enclosure from a bottom part of the enclosure to a top part of the enclosure. The ventilation channel is fluidly communicated with the first compartment only at the top part thereof, for the ventilation of the first compartment, and preventing that an arc flash could reach the ventilation channel. Through the ventilation channel, forced cooling air can be supplied to the busbar terminals, thereby optimizing heat dissipation and maintaining optimal operating temperatures, thereby promoting system efficiency and longevity. This feature mitigates the risk of overheating, a common concern in electrical systems, and enhances overall performance.

In a preferred embodiment of the invention, the enclosure is provided with a front cover made of an impact-resistant material, such as a metal, which is detachable from the enclosure by means of tools, such that, when the front cover is attached to the enclosure, the front cover is one of the walls of the second compartment, and when it is detached from the enclosure, the second compartment is open to the enclosure exterior for inspection or replacement of the fuses. The front cover may be embodied, for example, as metal plate of suitable thickness to withstand impacts caused by arc events, with an electrically insulating material placed on an inner side of the front cover, in order to isolate the metal plate.

The enclosure may preferably be fitted with a cabinet for enclosing circuit breakers of the low or high voltage converter. The cabinet is attached to the enclosure, and it is placed above the second compartment, that is, above the fuses.

The enclosure may be formed by: side panels, a rear panel and a top panel, attached together by means of brackets placed on an external surface of the panels, so that, there is no metal parts inside the compartments. An internal surface of the rear panel is provided with grooves, and an edge of the sides panels is placed in a groove of the rear panel.

Another aspect of the invention refers to a wind turbine comprising: a voltage converter and the enclosure previously defined. The voltage converter in turn comprises bus-bars housed in the first compartment of the enclosure, fuses installed in the openings of the intermediate panel, and circuit breakers housed in the cabinet and electrically connected to the bus-bars.

The wind turbine further comprises means for generating a forced cooling air flow through the ventilation channel of the enclosure, such that the forced cooling air flow is injected into the enclosure through its bottom base, and from the ventilation channel to the first compartment.

The enclosure may be installed above a high-voltage zone, seen in the direction of gravity, of the wind turbine, that is, the enclosure is strategically located between the Main Grid Circuit Breaker and the High Voltage room.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
- Figure 1: shows several perspective views of a preferred embodiment of the enclosure of the invention. In Figure 1C, the cabinet for the circuit breakers is omitted for the sake of the illustration.

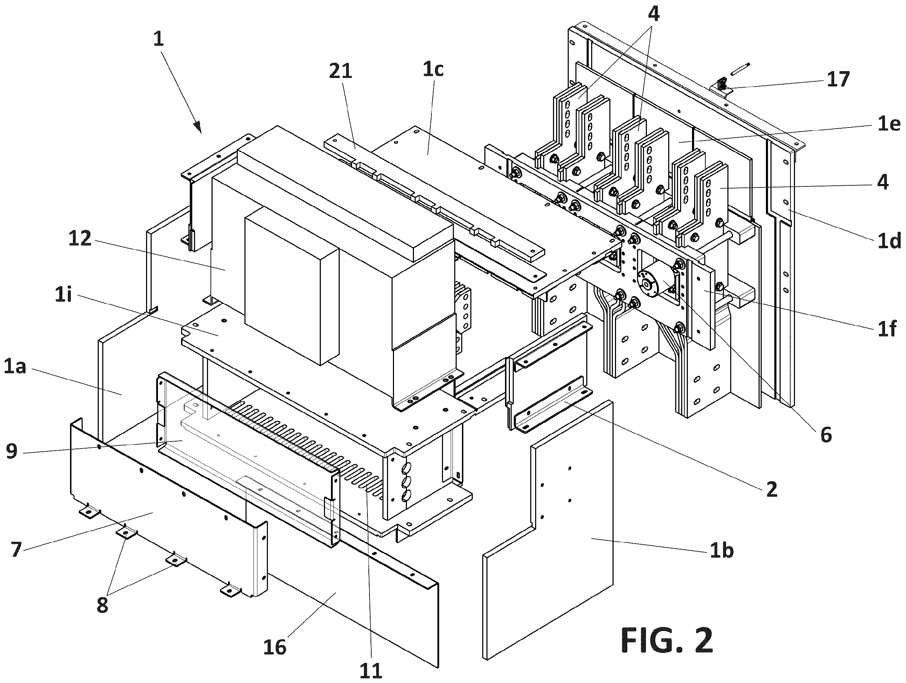

- Figure 2: shows an exploded view of the enclosure of the previous figure.

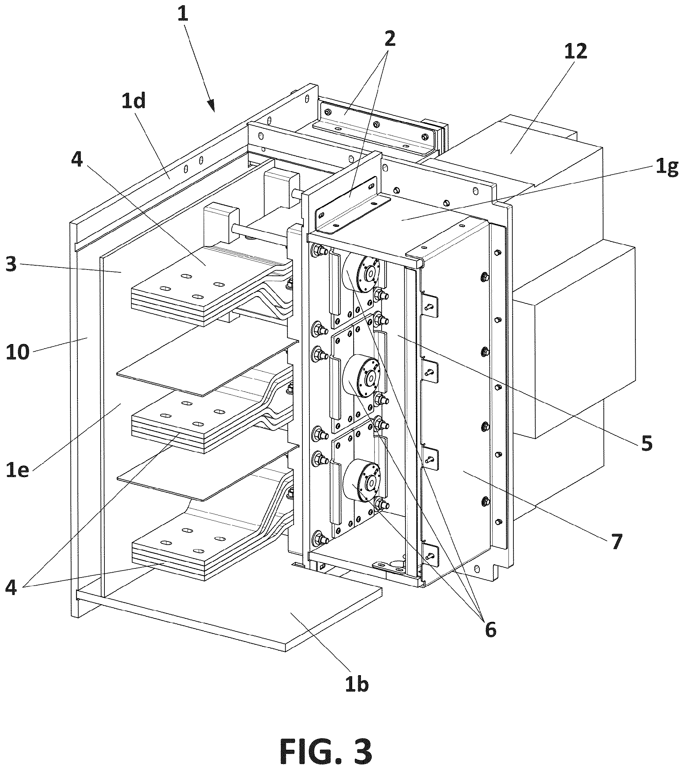

- Figure 3: shows another perspective of the enclosure from below.
- Figure 4: shows another perspective of the enclosure with an upper part removed.
- Figure 5: shows a top plan view of Figure 4.

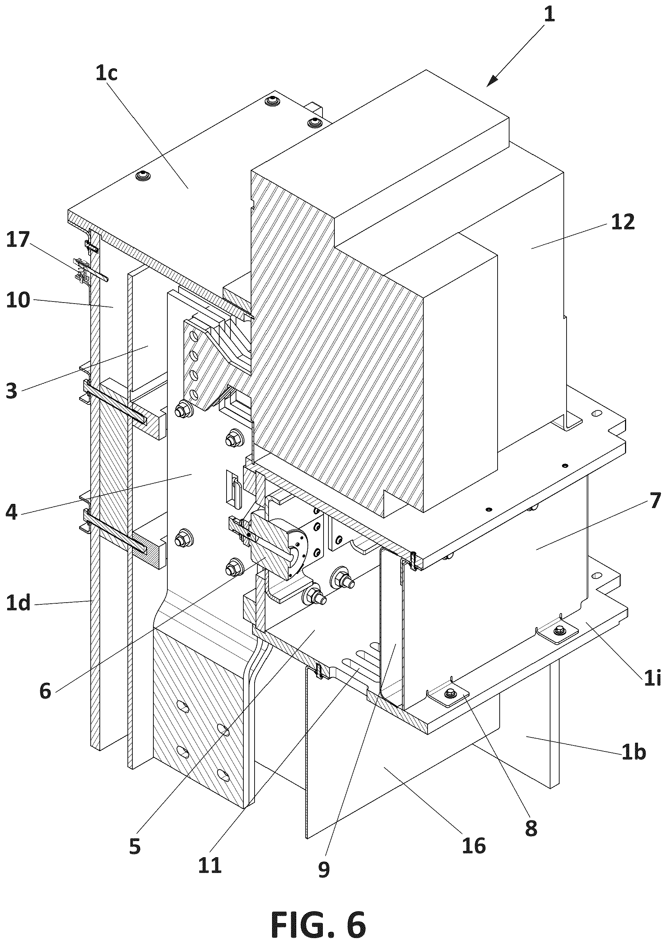

- Figure 6: shows a perspective cross-sectional view of the enclosure including the cabinet for the circuit breakers.
- Figure 7: shows a side elevational view of Figure 6.
- Figure 8: shows a side elevational view of the enclosure of the previous figures installed in a low voltage converter of a wind turbine.

### PREFERRED EMBODIMENTS OF THE INVENTION

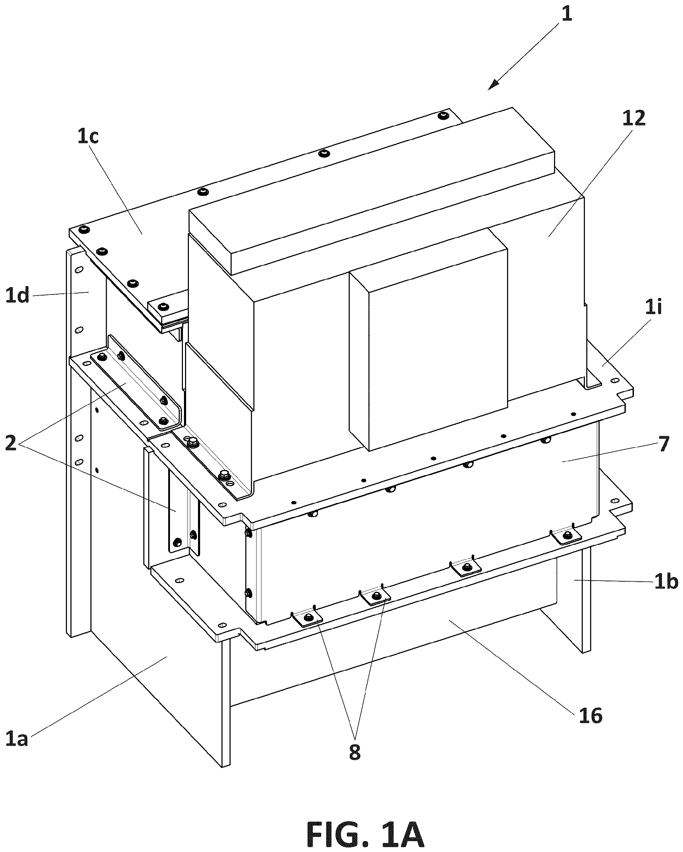

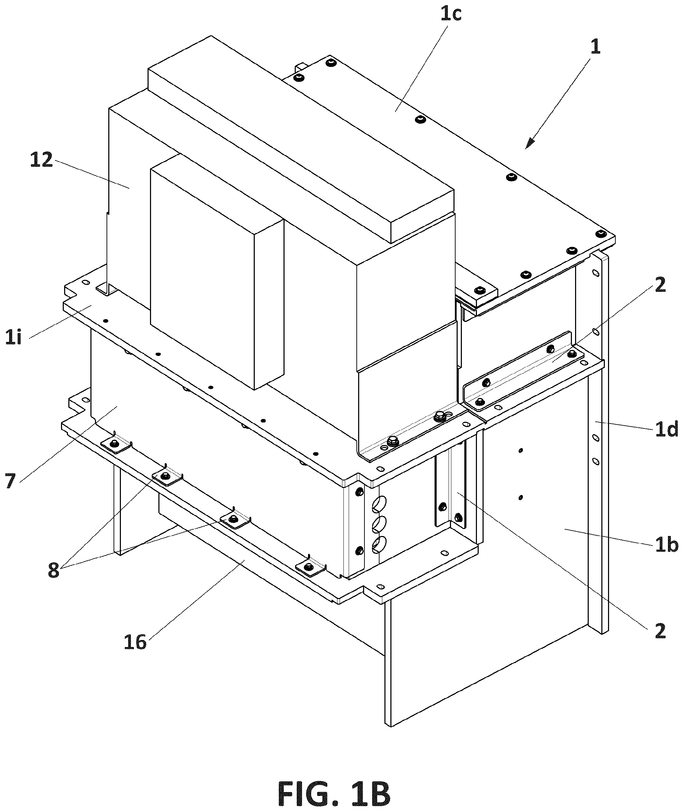

Figures 1A to 1C show an embodiment of the enclosure (1) of the invention, which comprises: a plurality of panels (1a - 1i) made of an electrically isolating and arc-resistant material, for example a PE 200 material which is very strong and retains its high mechanical strength even at high temperatures. This material features a high thermal stability, in addition to its extremely good electrical insulation properties, low water absorption and high machinability, which makes it a suitable material for the enclosure implementation.

In particular, the enclosure (1) is formed by left and right side panels (1a, 1b), a top panel (1c), and a rear panel (1d), attached together by means of L-shaped brackets (2) placed on an external surface of the panels. The enclosure (1) configures a closed space for housing electric equipment, inside which a first compartment (3) housing busbars (4) of a low or high voltage converter, and a second compartment (5) housing part of fuses (6) of the low or high voltage converter. The first and second compartments (3, 5) are isolated from each other, thereby preventing an arch flash occurring in one of the compartments from reaching the other compartment.

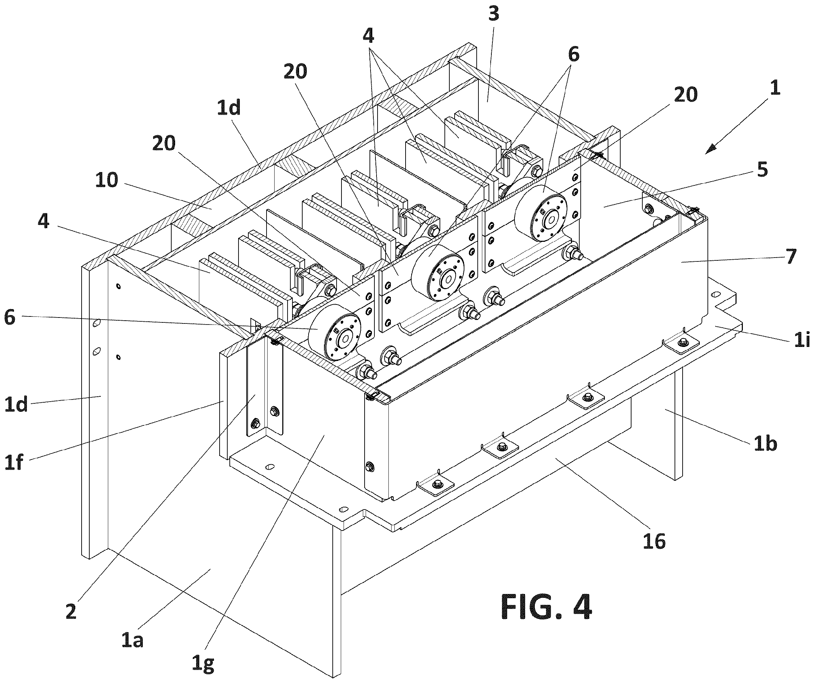

Additionally, the enclosure (1) includes: an internal panel (1e), an intermediate panel (1f), third and fourth internal panels (1g, 1h), and fifth internal panel (1i), wherein the fifth internal panel (1i) is placed horizontally with respect to the other internal panels. As better shown in **Figure 4****,** the first compartment (3) is formed by the first internal panel (1e), the two side panels (1a, 1b) and the intermediate panel (1f), and the second compartment (5) is formed by the intermediate panel (1f), third and fourth internal panels (1g, 1h) and the fifth internal panel (1i), together with a front cover (7) which is made of an impact-resistant material, for example a metal plate.

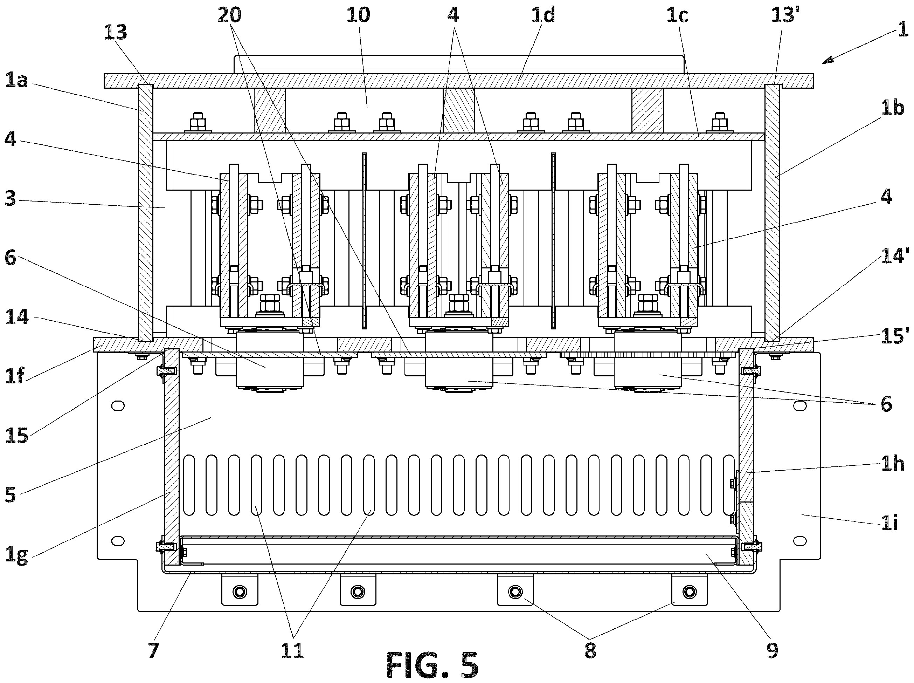

In cooperation with the brackets (2), the panels are coupled to each other by means of a groove and edge coupling as shown for example in **Figure 5****,** in order to enhance insulation between adjacent panels. The rear panel (1d) has grooves (13, 13') on its inner side, and the edges of the side panels (1a, 1b) are inserted individually in the grooves (13, 13'). Similarly, intermediate panel (1f) has a first pair grooves (14, 14') on its side corresponding to the first chamber (3) and other edges of side panels (1a, 1b) are inserted individually in these grooves (14, 14'). A second pair of grooves (15, 15') is formed on the other side of the intermediate panel (1f) corresponding to the second compartment (5), and edges (1g, 1h) are inserted in these grooves (15, 15').

The fifth internal panel (1i) is provided with ventilation vents (11) for the ventilation of the second compartment (5), and the part of the fuses (6) located in that compartment.

An electrically insulating material, for example an insulating plate (9) is placed on an inner side of the front cover (7). The front cover (7) is attached to the third, fourth and fifth internal panels (1g, 1h, 1i) by means of screws (8), so that, the front cover (7) can be detached from the panels, to provide access to the second compartment (5) for inspection or replacement of the fuses (6).

The intermediate panel (1f) separating the first and second compartments (3, 5), has openings configured for retaining a fuse (6) such that when a fuse is installed in one of the openings, one part of each fuse, the safe part thereof, is placed at the first compartment (3) and other part of the fuse, is placed at the second compartment (5), so that this part is isolated from the busbars (4). More in detail, the intermediate panel (1f) has insulation plates (20) attached to it, and wherein the insulation plates (20) have the openings for receiving the fuses (6).

This arrangement of the fuses mitigates the potential risks associated with arc incidents, particularly in proximity to critical areas such as the transformer or busbar/electrical connections, thus, maintaining integrity of critical system components, mitigating downtime, reducing maintenance costs, and enhancing overall operational efficiency to delivering robust and dependable electrical infrastructure solutions.

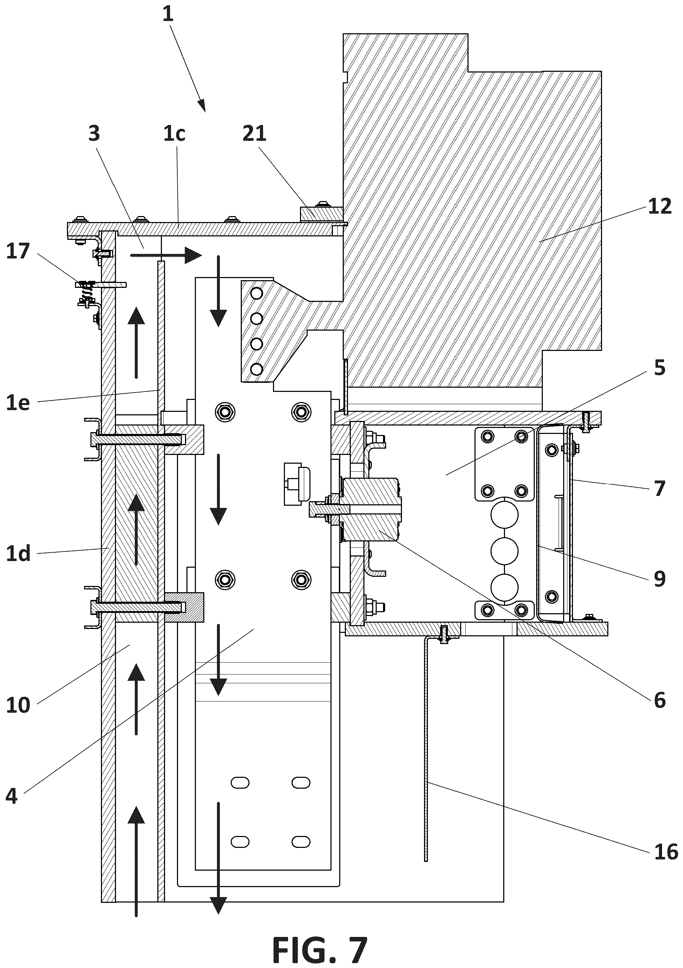

A ventilation channel (10) is formed inside the enclosure (1) extending vertically from a bottom part of the enclosure to a top part of the enclosure. More specifically, the ventilation channel (10) is formed by the rear panel (1d), the first internal panel (1e), and the two side panels (1a, 1b), as shown for example in **Figure 5****.** The ventilation channel (10) is fluidly communicated with the first compartment (3) at the top part the same, for the ventilation of the first compartment as indicated by the arrows in **Figure 7****.**

Effective air cooling not only ensures the immediate performance of the busbar (4), but also contributes to their long-term longevity. By mitigating the effects of overheating and thermal stress, the design reduces the likelihood of premature component failure, thereby minimizing maintenance requirements and enhancing overall system durability.

The rear panel (1d) comprises a temperature sensor (17) to capture relevant thermal data at the upper part, i.e. downstream, of the ventilation channel (10) and behind panel (1e), to be protected against potential damage in the event of an arc blast inside the first compartment (3).

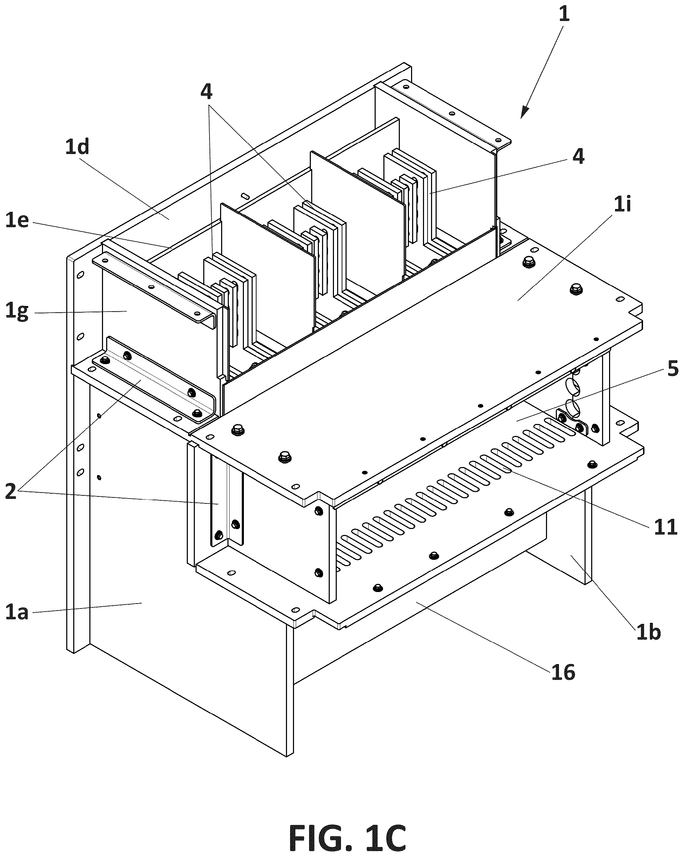

The enclosure (1) further comprises a cabinet (12) which is attached to the enclosure (1), and which is meant to enclose circuit breakers (not shown) of the low or high voltage converter. As shown for example in **Figure 7****,** this cabinet (12) is placed above the second compartment (5). At top part of the first compartment (3) comprises an opening as shown in **Figures 1C** and **7****,** for electrically connecting the busbars (4) with the circuit breakers inside the cabinet (12). For that connection, the cabinet (12) interior is accessible through its rear side.

Under the second compartment (5), a shield (16) embodied as a metal plate, closes the space of the enclosure (1) underneath the second compartment (5).

A reinforcing bar (21) is fixed in the upper side of the top panel (1c), for protecting this part of the enclosure (1).

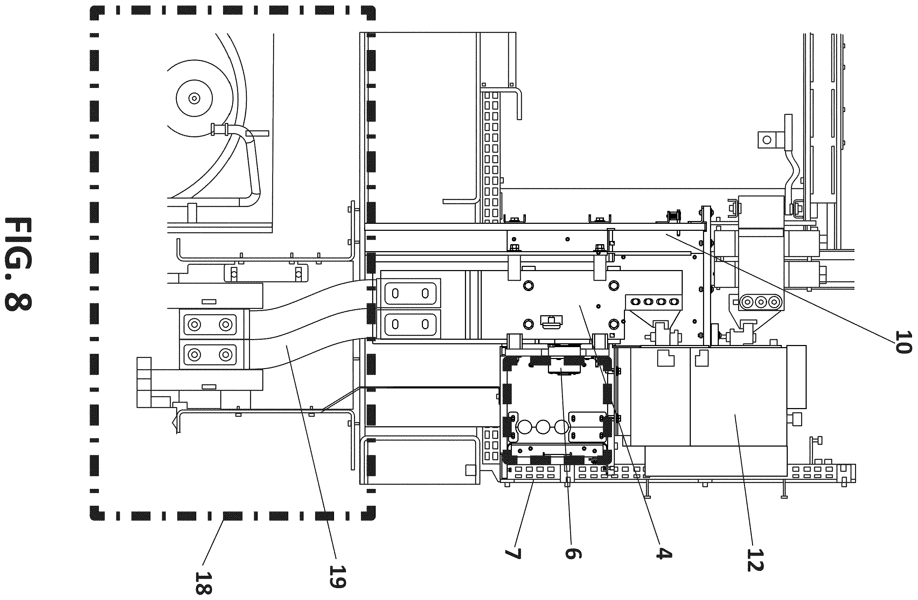

**Figure 8** shows a practical implementation of the invention, in which the enclosure (1) is installed in a low voltage converter of a wind turbine. The enclosure (1) is arranged above (seen in relation to the direction of gravity), i.e. adjacent but separate, a high-voltage zone (18) which includes transformer interface busbars (19) connected to the busbars (4), so the enclosure (1) is strategically positioned between the main grid circuit breaker and the high voltage room or an area where it is safe to release high arc energy.

The wind turbine includes means for generating a forced cooling air flow through the ventilation channel (10) of the enclosure (1), such that the forced cooling air flow is injected into the enclosure through its bottom base, and from the ventilation channel to the first compartment. The implementation of an effective air-cooling system serves as a proactive measure to prevent overheating of the electrical connections and breaker terminals. This system facilitates the continuous circulation of cooled air around the terminals, dissipating heat generated during operation. By efficiently removing excess heat, the design ensures that the terminals operate within safe temperature limits, optimizing their functionality and preventing performance degradation.

As a remark, the figures and the above disclosure of embodiments only is for illustration and example, In other embodiments the arc-resistant enclosure is simply made of an electrically isolating and arc-resistant material, and has internally a first compartment (3) adapted for housing busbars (4) of a low or high voltage converter, and a second compartment (5) adapted for housing fuses (6) or part of the fuses of the low or high voltage converter, wherein the first and second compartments (3, 5) are isolated from each other forming a barrier against an arch flash occurring in one of the compartments from reaching the other compartment.

Then enclosure (1) in this embodiment may comprise an intermediate wall (1f) separating the first and second compartments (3, 5), the intermediate wall (1f) having openings, each opening configured for retaining a fuse (6) such that when a fuse is installed in one of the openings, one part of the fuse is placed at the first compartment (3) and other part of the fuse is placed at the second compartment (5). The intermediate wall (1f) may then be a detachable panel.

## Claims

1. An arc-resistant enclosure (1) for wind turbine power converters, where the enclosure (1) is made of an electrically isolating and arc-resistant material, wherein the enclosure (1) has internally a first compartment (3) adapted for housing busbars (4) of a low or high voltage converter, and a second compartment (5) adapted for housing fuses (6) or part of the fuses of the low or high voltage converter, wherein the first and second compartments (3, 5) are isolated from each other by means forming by a barrier for an arch flash occurring in one of the compartments from reaching the other compartment.

2. The enclosure (1) according to claim 1, comprising an intermediate wall (1f) separating the first and second compartments (3, 5), the intermediate wall (1f) having at least one opening, each opening configured for retaining a fuse (6) such that when a fuse is installed in one of the openings, one part of the fuse is placed at the first compartment (3) and other part of the fuse is placed at the second compartment (5).

3. The enclosure (1) according to claim 2, wherein the intermediate wall (1f) is a detachable panel.

4. The enclosure (1) according to claim 1, 2 or 3, comprising a plurality of elements (1a - 1i), wherein the elements are assembled to configure a closed space.

5. The enclosure (1) according to claim 1, 2, 3 or 4, further comprising a ventilation channel (10) extending inside or along the enclosure (1), and wherein the ventilation channel (10) is fluidly communicating with the first compartment (3) at the top part thereof for ventilating the first compartment (3) .

6. The enclosure (1) according to any of the preceding claims, further comprising a front cover panel (7) made of an impact-resistant material, which is detachable from the enclosure (1), such that, when the front cover panel (7) is in a closed position, the front cover panel (7) is one of the walls of the second compartment (5), and when it is in an open position, the second compartment (5) is accessible from the exterior

7. The enclosure according to claim 6, wherein the cover panel (7) further comprises an electrically insulating material (9) on the inner side.

8. The enclosure (1) according to any of the preceding claims, further comprising a cabinet (12) for enclosing circuit breakers of the low or high voltage converter, wherein the cabinet is attached to the enclosure (1) the vicinity / in a panel forming the second compartment (5).

9. The enclosure (1) according to any of the preceding claims, wherein a bottom wall of the second compartment (5), comprises ventilation vents (11).

10. The enclosure (1) according to any of the preceding claims, comprising: side panels (1a, 1b), a rear panel (1d), a top panel (1c), attached together by means of brackets (2) placed on external surfaces of the panels.

11. An enclosure (1) according to claim 2 and 10, wherein a surface of the rear panel (1d) and/or a surface of the intermediate wall (1f) is provided with at least one groove (13, 13', 14, 14', 15, 15'), and wherein an edge of an adjacent panel is inserted in said groove.

12. An enclosure (1) according to claim 2 and 10, wherein the intermediate wall (1f) and/or panels (1a - 1i) are made of fiberglass.

13. An enclosure (1) according to any of the claims 2 to 12, wherein the intermediate wall (1f) has insulation plates (20) attached to it, and wherein the insulation plates (20) have the openings for receiving the fuses (6).

14. A Wind turbine comprising:
an enclosure (1) according to any of claims 2 to 12, and
a voltage converter, the voltage converter comprising:
a plurality of busbars (4) housed in the first compartment (3) of the enclosure (1),
a plurality of fuses (6) installed in the openings of the intermediate panel (1f),
a plurality of circuit breakers housed in the cabinet (12) and electrically connected to the busbars (4).
(review claim 13)

15. The wind turbine according to claim 14, further comprising means for generating a forced cooling air flow through the ventilation channel (10) of the enclosure (1), such that the forced cooling air flow is injected into the enclosure (1) through its bottom base, and from a ventilation channel (10) to the first compartment (3).
